Europäisches Patentamt

European Patent Office

Office européen des brevets

(11) Publication number: 0 492 810 A2

# EUROPEAN PATENT APPLICATION

(21) Application number: 91311039.1

(22) Date of filing: 28.11.91

(51) Int. Cl.⁵: F24F 3/14

(30) Priority: 20.12.90 GB 9027645

(43) Date of publication of application:
01.07.92 Bulletin 92/27

(84) Designated Contracting States:
DE ES FR GR IT

(71) Applicant: CREDA LIMITED
P.O. Box 5 Creda Works Blythe Bridge
Stoke-on-Trent Staffordshire, ST11 9LJ(GB)

(72) Inventor: Dhanjal, Manmohan Singh
112 Spencefield Lane
Evington, Leicester LE5 6HF(GB)

(74) Representative: Waters, Jeffrey et al
The General Electric Company plc Central
Patent Department Marconi Research Centre
West Hanningfield Road
Great Baddow Chelmsford Essex CM2
8HN(GB)

(54) Dehumidification unit.

(57) A dehumidification unit of a comfort system for a room employs a refrigeration system using a condenser located in region 13 and an evaporator, the main section of which is located in a region 14. In accordance with the invention the superheating coil of the evaporator is located in front of the condenser in the region 13 so that air withdrawn from the room and passing in the direction of the arrows C has moisture extracted from it as it condenses over the superheating section 15. The air is heated by the condenser in the region 13. Additional heating may be provided by heating element 16.

FIG.3.

This invention relates to a dehumidification unit for a room.

It is known (e.g. from GB-A-2125159) to employ for this purpose a refrigeration system including an evaporator and a condenser together with respective fans for assisting the flow of air through the evaporator and condenser.

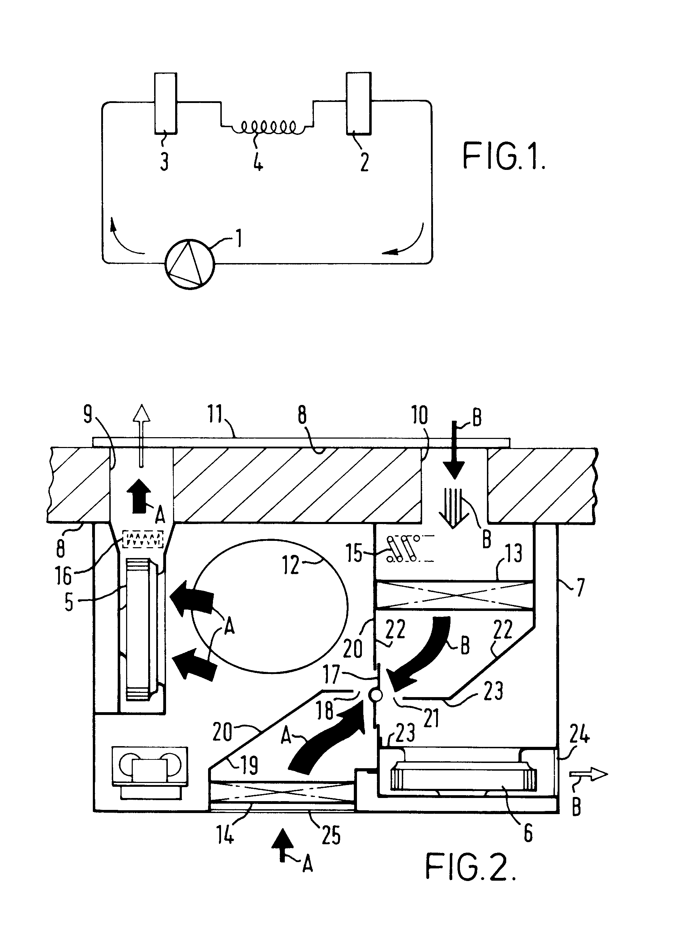

Referring to Figure 1, in one known system, a compressor 1 draws refrigerant vapour from an evaporator 2, in which evaporator refrigerant was vaporised by heat extracted from the air flowing past the evaporator. The compressor 1 compresses and, in so doing heats, the refrigerant vapour, which condenses in condenser 3, thereby heating the air flowing past the condenser. The liquid refrigerant then returns to the evaporator through an expansion valve 4, which maintains the vapour pressure in the condenser high and that in the evaporator low. Fans (not shown) are provided to assist air flow through the condenser and the evaporator. Air drawn from a room to be dehumidified is passed through the evaporator, where moisture condenses, and is then returned to the room.

The invention provides a dehumidification unit for a room, comprising a refrigeration system including an evaporator, a condenser and a flow passage for the recirculation of air drawn from the room and past the condenser back into the room, wherein a part of the evaporator is located in the flow passage to enable the humidity of the recirculated air to be varied, and the remainder of the evaporator is located in a flow passage which in use receives air from a region exterior of the room and exhausts air into a region exterior of the room.

Part of the evaporator thus provides dehumidification while the remainder permits heating of the room by heat pump action from the region outside the room, typically, atmospheric air outside an external wall of the room on which the unit may be mounted.

A dehumidification unit for a room constructed in accordance with the invention will now be described, by way of example, with reference to the accompanying drawings, in which:

Figure 2 is a schematic plan view of the unit with an air valve in a cooling mode; and

Figure 3 is a schematic plan view of the unit with the air valve in a heating mode.

In addition to a dehumidification function, the unit also performs a heating or a cooling function (described and claimed in co-pending British Patent Application No. 9027644.5.

Referring to Figure 2, the unit is housed in a weatherproof enclosure 7 which projects from the outside of an external wall 8 of a room and communicates with the interior of the room by means of two apertures 9, 10 in the wall, which are covered, in the interior of the room by a panel 11 containing a grille (not shown) and the controls for the unit (not shown).

The unit comprises the vapour compression circuit as shown in Figure 1. The compressor 1 is located in region 12, the condenser 3 is located in region 13 and the evaporator 2 is in two separate sections, an upstream main section of finned tubes in the region 14 connected to a downstream superheating coil 15. Two centrifugal fans 5, 6 are provided, each drawing in air axially and expelling it radially, and an electric heating element 16 is also provided.

In operation in a cooling mode, an air valve 17 uncovers an aperture 18 to allow communication between a duct 19 containing the main section of the evaporator 2 and a passageway 20 which leads via the fan 5 to the outlet duct 9 leading into the room. The air valve equally allows communication via an aperture 21 between a duct 22 containing the condenser and leading from the room via aperture 10 to a passageway 23 containing air extraction fan 6. In this mode, the extraction fan 6 sucks air from the room, past the superheating coil 15, where it is cooled, and past condenser 3, where it is heated, before expelling it into the atmosphere via an outlet grille 24 - see arrows B. Cooled air is impelled into the room by fan 5 from the atmosphere via grille 25. The air is cooled by passage over the main section of the evaporator in the region 14 - see arrows A.

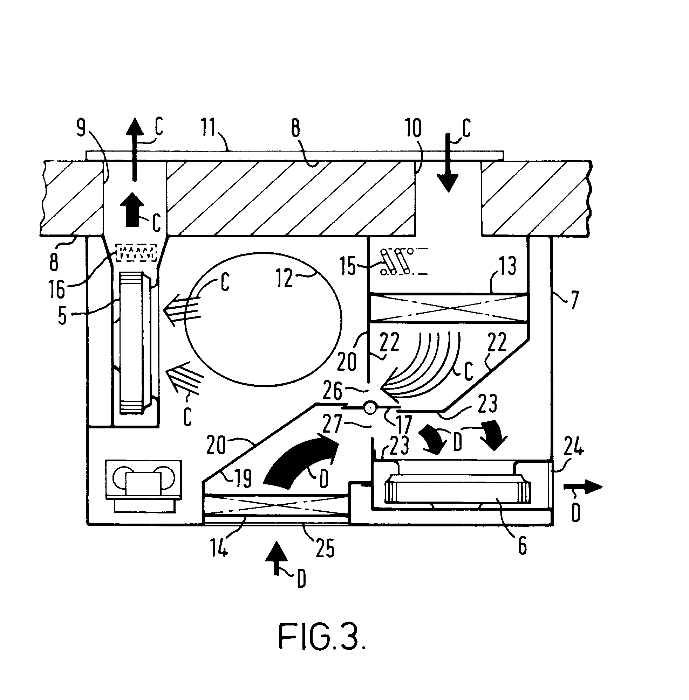

In a heating mode, the controls on the unit are altered to pivot the air valve to the position shown in Figure 3. In this position, the apertures 18 and 21 are closed, and apertures 26, 27 are uncovered. These apertures were of course covered in the mode operation shown in Figure 2.

Air sucked into the air conditioning unit in the heating mode is returned to the room. Thus, air is sucked in by impeller 5 via the aperture 10 into the duct 22, and passes over superheating coil 15 and past condenser in the region 13 passing via the aperture 26 to the passageway 20 to aperture 9 - arrows C. There will be some cooling of the air at the superheating coil 15, and some moisture in the air will condense on the coil, but there will be a greater heating effect from the condenser 3, and the heating element 16 also heats the air. Thus, in the heating mode, the air is heated and to some extent dehumidified.

The heat given out by the condenser is supplied to the main section of the evaporator from the atmosphere, air being sucked into duct 19 containing the main section of the evaporator and into the passageway 23 via the aperture 27 by means of the extraction fan 6. The air is expelled to the atmosphere via outlet grille 24. See arrows D.

The amount of heat supplied by the electric heating element may be varied. Thus, when the ambient temperature is higher, more evaporation can take place in the evaporator 2, and hence more heat can be supplied from the condenser 3, so that less is needed from the electric heating means. When the ambient temperature is lower, a greater proportion of the heat supplied by the air conditioning unit can be provided by the electrical heating means.

The heating element 16 may be switched off altogether, and the dehumidification unit now operates solely in the dehumidification mode in accordance with the invention. As explained above, condensation takes place on superheating coil 15 of the evaporator, and the same air is returned to the room at lower humidity. The superheating coil 15 has a by-pass controlled by a solenoid valve (not shown) which is responsive to a room humidity sensor (not shown). When the humidity in the room rises above a predetermined level, the superheating coil is connected in series with the main section of the evaporator. When the humidity is below that level, the upstream and downstream ends of the superheating coil are put into communication with each other, so that the refrigerant flow bypasses the coil. The main reason for this approach is that the latent heat transfer to the superheater section decreases with a decrease in the dew point temperature of the room air.

Thus, when the humidity in the room rises above a preset level, the by-pass path is closed by the solenoid valve, and moisture in the air drawn into the room is condensed onto the surface of the superheating coil. That same air is then returned to the room via the aperture 9 but the air is now drier. When the room humidity has been reduced to below the preset level, the solenoid opens the by-pass path and refrigerant does not flow through the superheating coil. In this condition, moisture is not withdrawn from the air circulating through the air conditioning unit.

The air valve 17 has a small aperture 17a in it so that a certain amount of leakage across the valve takes place from the duct 22 to the passageway 23. The result is that more air is sucked from the room than is returned to the room i.e. there is a slight overall suction from the air conditioning unit. This provides ventilation, since the room air is regularly changed. A typical rate of change for an average room would be an overall air change in a time of the order of two hours. A typical dehumidification rate is around 0.4 litres per day, which would correspond to the moisture generated by four people in a typical room over a period of 5 hours in a day.

The heating capacity could be 3kW at -1°C, 1.7kW from the element and 1.3kW from the heat pump action. The output from the heat pump would be higher, say, 1.7kW at 5°C ambient.

The cooling capacity could be 1.5kW at an ambient temperature of around 30°C.

## Claims

1. A dehumidification unit for a room, comprising a refrigeration system including an evaporator, a condenser and a flow passage for the recirculation of air drawn from the room and past the condenser back into the room, wherein a part of the evaporator is located in the flow passage to enable the humidity of the recirculated air to be varied, and the remainder of the evaporator is located in a flow passage which in use receives air from a region exterior of the room and exhausts air into a region exterior of the room.

2. A dehumidification unit as claimed in claim 1, in which the part of the evaporator that is located in the flow passage for the condenser, is a superheating section of the evaporator.

3. A dehumidification unit as claimed in claim 1 or claim 2, in which a by-pass connects the ends of the part of the evaporator located in the flow passage for the condenser, the by-pass passage being opened in use when the humidity sensed by a room sensor falls below a predetermined level.

FIG.1.

FIG.2.

FIG.3.